# EUROPÄISCHE PATENTANMELDUNG

(11) **EP 1 537 930 A1**
(43) Veröffentlichungstag der Anmeldung: **08.06.2005**
(21) Anmeldenummer: 03027954.1
(22) Anmeldetag: 04.12.2003
(51) Int. Cl.: B23B 27/14, B23B 27/10, B23K 26/34, B23K 26/38

(54) **Zerspanwerkzeug und Verfahren zur Endbehandlung eines Zerspanwerkzeuges**

(71) Anmelder: WENDT GmbH, D-40670 Meerbusch (DE)
(72) Erfinder: Lamers, Norbert, 47445 Moers (DE)
(74) Vertreter: DR. STARK & PARTNER

(57) **Zusammenfassung**

Die Erfindung betrifft ein Zerspanwerkzeug (1) und ein Verfahren zur Endbehandlung eines Zerspanwerkzeuges (1).

Um ein Zerspanwerkzeug (1) und ein Verfahren zu dessen Herstellung anzugeben, mit dem die Einschränkungen im Stande der Technik vermieden werden, soll der Bereich der Schneidengeometrie durch gezielte Einwirkung von geeigneter Laserstrahlung endbehandelt sein bzw. werden.

## Beschreibung

Die Erfindung betrifft ein Zerspanwerkzeug und ein Verfahren zur Endbehandlung eines Zerspanwerkzeuges.

Aus der Praxis sind verschiedenste Zerspanwerkzeuge bekannt, die beispielsweise als Wendeschneidplatte, Bohrer, Stufenbohrer, Fräser, Säge, Reibahle oder dergleichen ausgebildet sein können. Derartige Zerspanwerkzeuge bestehen in der Regel aus einem Werkzeugkörper und zumindest einer Schneidkante für die spanende Bearbeitung eines Werkstückes.

Derartige Zerspanwerkzeuge werden in der Regel durch ein mehrstufiges Verfahren hergestellt, bei dem die Makroformgebung durch Sintern oder insbesondere partielles Schleifen, wie z. B. Umfangsschleifen oder Schleifen von Spanleitstufen. Anschließend erfolgt die Mikroformgebung, die z. B. das Schleifen von Schutzfasen oder eine Kantenverrundung mittels Bürsten oder Sandstrahlen umfassen kann.

Nachteilig hierbei ist, dass sich die Mikroformgebung beschränkt auf gepresste und gesinterte Oberflächen, die z. B. durch Gradbildung eine geringe Genauigkeit an der Schneide des Zerspanwerkzeuges bewirken.

Schutzfasen können allenfalls gerade oder aber mit einer linearen Größenänderung entlang der Schneide geschliffen werden, und auch die Lage der Schutzfase kann an toleranzbedingte schwankende Größen des zu bearbeitenden Rohlings nur unzureichend angepasst werden, so dass einer Kante mit nicht geradlinigem, insbesondere "gewavtem" Verlauf, nur unzureichend gefolgt werden kann.

Weiterhin erfolgt auch das Verrunden der Schneidkante üblicherweise mit relativ ungenauen Verfahren, so dass die Größe und Form der Verundung nur unzureichend einstellbar ist.

Aufgabe der Erfindung ist es insofern, die vorgenannten Nachteile zu vermeiden, da der enorme Einfluss der Kantengestaltung auf den Schnittprozess bekannt ist und vorliegend Optimierungspotential bietet.

Diese Aufgabe wird gelöst durch ein Zerspanwerkzeug, das insbesondere als Wendeschneidplatte, Bohrer, Stufenbohrer, Fräser, Säge, Reibahle oder dergleichen ausgebildet sein kann, wobei der Bereich der Schneidengeometrie durch gezielte Einwirkung von geeigneter Laserstrahlung endbehandelt ist. Hierdurch kann die Kantenmikrogeometrie frei definiert werden, sowohl was Form, Oberflächenstruktur als auch Profil betrifft.

Die Überarbeitung der Schneidkantengeometrie kann zur Erhöhung der Leistung des Zerspanprozesses bei der späteren Verwendung des Zerspanwerkzeuges zwischen Freifläche und Spanfläche bzw. Spanleitstufe erfolgt sein.

Vorteilhafterweise kann die Endbehandlung in Form von Materialeigenschaften beeinflussender und/oder mikroformgebender und/oder abtragender Materialbearbeitung durch gezielte Einwirkung von geeigneter Laserstrahlung erfolgt sein.

Die Endbehandlung kann aber auch in Form von auftragender Materialbearbeitung durch gezielte Einwirkung von geeigneter Laserstrahlung unter Verwendung eines aufzutragenden Rohmaterials erfolgt sein.

Im Bereich der Schneidkante kann insofern zumindest eine Mikrospanleitstufe vorgesehen sein, die insbesondere einer konventionell hergestellten Spanleitstufe - aus Richtung der Schneidkante gesehen - vorgeordnet sein.

Auch kann im Bereich der Schneidkante zumindest eine, insbesondere einer konventionell hergestellten Schneide nachgeordnete, Mikroschneide vorgesehen sein, so dass die konventionelle Schneide zum Schruppen dient und mit der Mikroschneide geschlichtet werden kann.

Weiterhin kann auf zumindest einem Teilbereich des Zerspanwerkzeuges, insbesondere auf wenigstens einer Schneidfläche, eine von Profil und/oder Schneidengeometrie des Zerspanwerkzeuges unabhängige Rauhigkeit vorgesehen sein, die entweder als erhöhte Rauhigkeit, z. B. für eine bessere Haftung einer Beschichtung, oder als besondere geringe Rauhigkeit für verbesserte Gleiteigenschaften ausgebildet sein kann.

Insofern kann im Bereich der Schneidkante eine erhöhte Rauhigkeit, insbesondere in Form von Mikrovertiefungen, vorgesehen sein.

Vorteilhafterweise kann der Verlauf der Schneidkante vom Profil und/oder der Schneidengeometrie des Zerspanwerkzeuges unabhängig ausgebildet sein, so dass zum einen Profile höherer Ordnung, d. h. sehr komplexe Profile realisierbar sind. Auch können vertiefte Bereiche vorgesehen sein, so dass nur bestimmte Teilbereiche während der Bearbeitung mit dem Werkstück in Kontakt kommen. Dies kann z. B. verbesserte Kühl- und Schmiereigenschaften bewirken oder aber zur Erzielung geringerer Spanbreiten dienen.

Hierzu kann der Verlauf der Schneidkante vorspringende und zurückversetzte Teilbereiche aufweisen und insbesondere wellenförmig ausgebildet sein und/oder Kanäle für die Kühlung, Schmierung oder dergleichen aufweisen.

Hierbei kann der Verlauf der Rauhigkeit und/oder der Verlauf der Schneidkante jeweils ein zumindest bereichsweise gleichmäßiges Muster aufweisen, es sind jedoch auch unterschiedlichste Musterabfolgen einschließlich eventuell musterfreier Bereiche möglich.

Erfindungsgemäß können, insbesondere zur gezielten Verstärkung der Materialbelastbarkeit oder zur gezielten Schwächung eines genau definierten Materialbereiches, strukturiert vordefinierte Eigenspannungen, insbesondere Druckeigenspannungen, eingebracht sein, so dass die Materialeigenschaften, z. B. durch den Abschreckeffekt, auf den jeweiligen Einsatzzweck des Zerspanwerkzeuges speziell abgestimmt werden können.

Insbesondere bei Zerspanwerkzeugen aus lasertransparentem Material, wie z. B. Keramik, können somit durch entsprechendes Fokussieren der Laserstrahlung auch innerhalb des Materials, d. h. nicht nur auf der Materialoberfläche, gezielte Härtegefälle erzeugt werden, so dass z. B. Sollbruchstellen in einer bestimmten Materialtiefe erzielbar sind, die bei einem voreingestelltem Verschleiß des Zerspanwerkzeuges zum gezielten Versagen führen und somit Nachteile durch Bearbeitungen mit überhöhtem Verschleiß vermeiden.

Auch ein Rückwärtsbohren, z. B. von Kanälen oder dergleichen, ist insoweit möglich, so dass Nachteile durch Materialaustrag im Bereich der Schneide vermieden werden.

Derartige Kanäle, vorwärts wie rückwärts gebohrt, können als Mikrokanäle im Bereich der Schneidkante ausgebildet sein, und es kann zumindest ein Mikrokanal für die Zufuhr von Kühlmittel oder dergleichen endseitig offen ausgebildet sein. Auch kann zumindest ein Mikrokanal für die Aufnahme von Temperatur-, Körperschall- oder anderen Sensoren endseitig geschlossen ausgebildet sein.

Die Erfindung betrifft auch ein Verfahren zur Endbehandlung eines insbesondere als Wendeschneidplatte, Bohrer, Stufenbohrer, Fräser, Säge, Reibahle oder dergleichen ausgebildeten Zerspanwerkzeuges im Bereich der Schneidengeometrie, insbesondere zur Endbehandlung eines Zerspanwerkzeuges.

Um die eingangs genannten Nachteile bei vorbekannten Verfahren zu vermeiden, erfolgt die Endbehandlung durch gezielte Einwirkung von geeigneter Laserstrahlung.

Dabei kann die Endbehandlung in Form von Materialeigenschaften beeinflussender Materialbearbeitung und/oder in Form von mikroformgebender Materialbearbeitung und/oder in Form von abtragender Materialbearbeitung durch gezielte Einwirkung von geeigneter Laserstrahlung erfolgen.

Insofern kann mittels der zumindest partiellen Änderung der Materialeigenschaften sowohl die Gefügestruktur verändert werden und es lassen sich gezielt Härtegefälle oder dergleichen innerhalb des Materials einstellen.

Insbesondere kann die Endbehandlung zur Erhöhung der Leistung des Zerspanprozesses bei der späteren Verwendung des Zerspanwerkzeuges die Schneidkantengeometrie zwischen Freifläche und Spanfläche bzw. Spanleitstufe umfassen.

Vorzugsweise kann im Bereich der Schneidkante eine, insbesondere einer konventionell hergestellten Spanleitstufe vorgeordnete, Mikrospanleitstufe erzeugt werden.

Auch kann auf zumindest einem Teilbereich des Zerspanwerkzeuges, insbesondere auf wenigstens einer Schneidfläche, eine von Profil und/oder Schneidengeometrie des Zerspanwerkzeuges unabhängige Rauhigkeit erzielt werden, und es kann ein von Profil und/oder Schneidengeometrie des Zerspanwerkzeuges unabhängiger Verlauf der Schneidkante erzielt werden.

Weiterhin können, insbesondere zur gezielten Verstärkung der Materialbelastbarkeit oder zur gezielten Schwächung eines genau definierten Materialbereiches, strukturiert vordefinierte Eigenspannungen, insbesondere Druckeigenspannungen, eingebracht werden.

Erfindungsgemäß können Mikrokanäle im Bereich der Schneidkante eingebracht werden, wobei zumindest ein Mikrokanal für die Zufuhr von Kühlmittel oder dergleichen endseitig offen ausgebildet sein kann und/oder zumindest ein Mikrokanal für die Aufnahme von Temperatur-, Körperschall- oder anderen Sensoren endseitig geschlossen ausgebildet sein.

Vorteilhafterweise kann ein, insbesondere flüssiges oder pulverförmiges, Beschichtungsmaterial auf die Oberfläche des Zerspanwerkzeuges aufgebracht werden, was durch Einwirkung der Laserstrahlung zu einer Beschichtung aufgeschmolzen wird.

Ein besonderer Vorteil des erfindungsgemäßen Verfahrens bestehet darin, dass durch eine entsprechende Sensoreinrichtung eine Detektion des Zerspanwerkzeuges anhand der reflektierten Laserstrahlung erfolgen kann, so dass die Lagedetektion des zu bearbeitenden Werkstücks berührungslos durch das für die Bearbeitung (Endbehandlung) verwendete "Werkzeug" erfolgen kann.

Im Folgenden werden in der Zeichnung dargestellte Ausführungsbeispiele der Erfindung erläutert. Es zeigen:
- Fig. 1: ein erstes Ausführungsbeispiel eines erfindungsgemäßen Zerspanwerkzeuges im Schnitt und
- Fig. 2: eine perspektivische Darstellung eines zweiten Ausführungsbeispieles eines erfindungsgemäßen Zerspanwerkzeuges.

In allen Figuren werden für gleiche bzw. gleichartige Bauteile übereinstimmende Bezugszeichen verwendet.

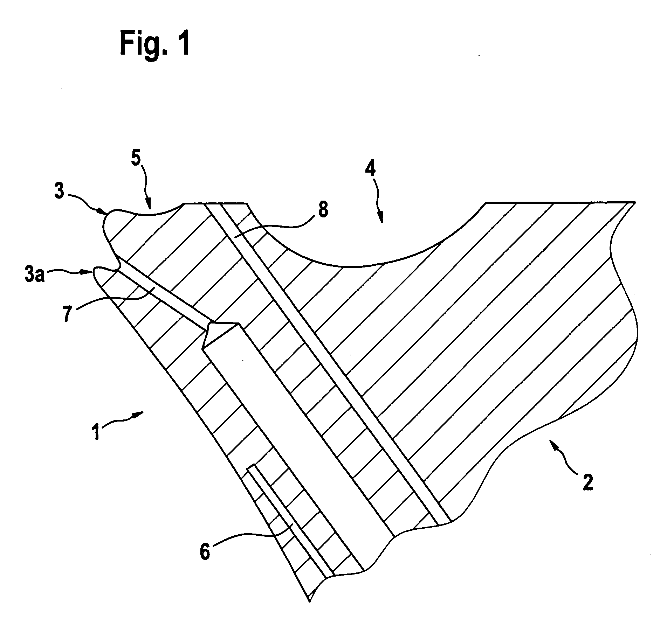

Fig. 1 zeigt ein erfindungsgemäßes Zerspanwerkzeug 1, dass einen Werkzeugkörper 2 mit einer Schneidkante 3 und einer als Mikroschneide 3a ausgebildeten zusätzlichen Schneidkante umfasst.

Das Zerspanwerkzeug 1 ist mit einer konventionell hergestellten und normal dimensionierten Spanleitstufe 4 versehen und weist eine Mikrospanleitstufe 5 auf, die aus Richtung der Schneidkante 3 gesehen der konventionellen Spanleitstufe 4 vorgeordnet ist.

Das Zerspanwerkzeug 1 ist weiterhin mit einem endseitig geschlossenen Mikrokanal 6 für einen in der Zeichnung nicht dargestellten Sensor versehen und beinhaltet auch einen endseitig offenen, in eine Kühlmittelzuführbohrung mündenden Mikrokanal 7. Weiterhin ist auch ein endseitig offener Mikrokanal 8 für einen anderen, ebenfalls in der Zeichnung nicht dargestellten Sensor, vorgesehen.

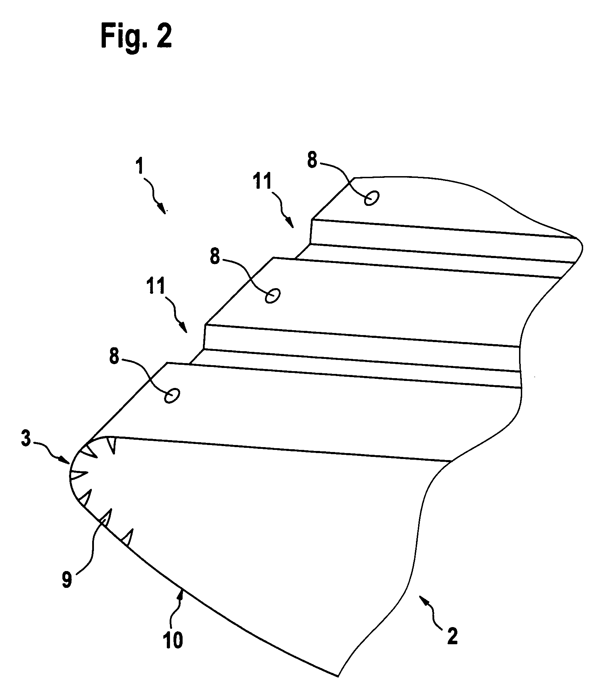

Fig. 2 zeigt ein alternatives erfindungsgemäßes Zerspanwerkzeug 1, bei dem entlang der Schneidkante 3 eine Rauhigkeit durch Mikrovertiefungen 9 gebildet ist, die eine verbesserte Haftung der verschleißmindernden Schicht 10 bewirkt. Die Oberfläche des Zerspanwerkzeuges 1 ist mit vertieften Bereichen 11 versehen, die kanalförmig ausgebildet sind. Offene Mündungen von Mikrokanälen 8 für Sensoren oder Kühl- bzw. Schmiermittel sind ebenfalls vorgesehen.

## Patentansprüche

1. Zerspanwerkzeug (1), insbesondere Wendeschneidplatte, Bohrer, Stufenbohrer, Fräser, Säge, Reibahle oder dergleichen, **dadurch gekennzeichnet, dass** der Bereich der Schneidengeometrie durch gezielte Einwirkung von geeigneter Laserstrahlung endbehandelt ist.

2. Zerspanwerkzeug (1) nach Anspruch 1, **dadurch gekennzeichnet, dass** die Endbehandlung in Form von Materialeigenschaften beeinflussender Materialbearbeitung durch gezielte Einwirkung von geeigneter Laserstrahlung erfolgt ist.

3. Zerspanwerkzeug (1) nach Anspruch 1 oder 2, **dadurch gekennzeichnet, dass** die Endbehandlung in Form von mikroformgebender Materialbearbeitung durch gezielte Einwirkung von geeigneter Laserstrahlung erfolgt ist.

4. Zerspanwerkzeug (1) nach einem Ansprüche 1 bis 3, **dadurch gekennzeichnet, dass** die Endbehandlung in Form von abtragender Materialbearbeitung durch gezielte Einwirkung von geeigneter Laserstrahlung erfolgt ist.

5. Zerspanwerkzeug (1) nach einem Ansprüche 1 bis 4, **dadurch gekennzeichnet, dass** die Endbehandlung in Form von auftragender Materialbearbeitung durch gezielte Einwirkung von geeigneter Laserstrahlung unter Verwendung eines aufzutragenden Rohmaterials erfolgt ist.

6. Zerspanwerkzeug (1) nach einem der Ansprüche 3 bis 5, **dadurch gekennzeichnet, dass** im Bereich der Schneidkante (2) zumindest eine, insbesondere einer konventionell hergestellten Spanleitstufe (4) vorgeordnete, Mikrospanleitstufe (5) vorgesehen ist.

7. Zerspanwerkzeug (1) nach einem der Ansprüche 3 bis 6, **dadurch gekennzeichnet, dass** im Bereich der Schneidkante (2) zumindest eine, insbesondere einer konventionell hergestellten Schneidkante (3) nachgeordnete, Mikroschneide (3a) vorgesehen ist.

8. Zerspanwerkzeug (1) nach einem der Ansprüche 1 bis 7, **dadurch gekennzeichnet, dass** auf zumindest einem Teilbereich des Zerspanwerkzeuges (1), insbesondere auf wenigstens einer Schneidfläche, eine von Profil und/oder Schneidengeometrie des Zerspanwerkzeuges (1) unabhängige Rauhigkeit vorgesehen ist.

9. Zerspanwerkzeug (1) nach Anspruch 8, **dadurch gekennzeichnet, dass** im Bereich der Schneidkante (3) eine erhöhte Rauhigkeit, insbesondere in Form von Mikrovertiefungen (9), vorgesehen ist.

10. Zerspanwerkzeug (1) nach einem der Ansprüche 1 bis 9, **dadurch gekennzeichnet, dass** der Verlauf der Schneidkante (2) vom Profil und/oder der Schneidengeometrie des Zerspanwerkzeuges (1) unabhängig ausgebildet ist.

11. Zerspanwerkzeug (1) nach einem der Ansprüche 1 bis 10, **dadurch gekennzeichnet, dass** der Verlauf der Schneidkante (2) vorspringende und zurückversetzte Teilbereiche aufweist, insbesondere wellenförmig ausgebildet ist und/oder Kanäle (10) für die Kühlung, Schmierung oder dergleichen aufweist.

12. Zerspanwerkzeug (1) nach einem der Ansprüche 1 bis 11, **dadurch gekennzeichnet, dass,** insbesondere zur gezielten Verstärkung der Materialbelastbarkeit oder zur gezielten Schwächung eines genau definierten Materialbereiches, strukturiert vordefinierte Eigenspannungen, insbesondere Druckeigenspannungen, eingebracht sind.

13. Zerspanwerkzeug (1) nach einem der Ansprüche 1 bis 12, **dadurch gekennzeichnet, dass** Mikrokanäle (6, 7, 8) im Bereich der Schneidkante (2) eingebracht sind.

14. Zerspanwerkzeug (1) nach Anspruch 13, **dadurch gekennzeichnet, dass** zumindest ein Mikrokanal (7, 8) für die Zufuhr von Kühlmittel oder dergleichen endseitig offen ausgebildet ist.

15. Zerspanwerkzeug (1) nach Anspruch 13 oder 14, **dadurch gekennzeichnet, dass** zumindest ein Mikrokanal (6) für die Aufnahme von Temperatur-, Körperschall- oder anderen Sensoren endseitig geschlossen ausgebildet ist.

16. Verfahren zur Endbehandlung eines insbesondere als Wendeschneidplatte, Bohrer, Stufenbohrer, Fräser, Säge, Reibahle oder dergleichen ausgebildeten Zerspanwerkzeuges (1) im Bereich der Schneidengeometrie, insbesondere zur Endbehandlung eines Zerspanwerkzeuges (1) nach einem der Ansprüche 1 bis 15, **dadurch gekennzeichnet, dass** die Endbehandlung durch gezielte Einwirkung von geeigneter Laserstrahlung erfolgt.

17. Verfahren nach Anspruch 16, **dadurch gekennzeichnet, dass** die Endbehandlung in Form von Materialeigenschaften beeinflussender Materialbearbeitung durch gezielte Einwirkung von geeigneter Laserstrahlung erfolgt.

18. Verfahren nach Anspruch 16 oder 17, **dadurch gekennzeichnet, dass** die Endbehandlung in Form von mikroformgebender Materialbearbeitung durch gezielte Einwirkung von geeigneter Laserstrahlung erfolgt.

19. Verfahren nach einem Ansprüche 16 bis 18, **dadurch gekennzeichnet, dass** die Endbehandlung in Form von abtragender Materialbearbeitung durch gezielte Einwirkung von geeigneter Laserstrahlung erfolgt.

20. Verfahren nach Anspruch 18 oder 19, **dadurch gekennzeichnet, dass** im Bereich der Schneidkante (2) zumindest eine, insbesondere einer konventionell hergestellten Spanleitstufe (4) vorgeordnete, Mikrospanleitstufe (5) erzeugt wird.

21. Verfahren nach einem der Ansprüche 18 bis 20, **dadurch gekennzeichnet, dass** im Bereich der Schneidkante (2) zumindest eine, insbesondere einer konventionell hergestellten Schneidkante (3) nachgeordnete, Mikroschneide (3a) erzeugt wird.

22. Verfahren nach einem der Ansprüche 16 bis 21, **dadurch gekennzeichnet, dass** auf zumindest einem Teilbereich des Zerspanwerkzeuges (1), insbesondere auf wenigstens einer Schneidfläche, eine von Profil und/oder Schneidengeometrie des Zerspanwerkzeuges (1) unabhängige Rauhigkeit erzielt wird.

23. Verfahren nach einem der Ansprüche 16 bis 22, **dadurch gekennzeichnet, dass** ein von Profil und/oder Schneidengeometrie des Zerspanwerkzeuges (1) unabhängiger Verlauf der Schneidkante erzielt wird.

24. Verfahren nach einem der Ansprüche 16 bis 23, **dadurch gekennzeichnet, dass,** insbesondere zur gezielten Verstärkung der Materialbelastbarkeit oder zur gezielten Schwächung eines genau definierten Materialbereiches, strukturiert vordefinierte Eigenspannungen, insbesondere Druckeigenspannungen, eingebracht werden.

25. Verfahren nach einem der Ansprüche 16 bis 24, **dadurch gekennzeichnet, dass** Mikrokanäle (6, 7, 8) im Bereich der Schneidkante eingebracht werden.

26. Verfahren nach Anspruch 25, **dadurch gekennzeichnet, dass** zumindest ein Mikrokanal (7, 8) für die Zufuhr von Kühlmittel oder dergleichen endseitig offen ausgebildet ist.

27. Verfahren nach Anspruch 25 oder 26, **dadurch gekennzeichnet, dass** zumindest ein Mikrokanal (6) für die Aufnahme von Temperatur-, Körperschall- oder anderen Sensoren endseitig geschlossen ausgebildet ist.

28. Verfahren nach einem der Ansprüche 16 bis 27, **dadurch gekennzeichnet, dass** ein, insbesondere flüssiges oder pulverförmiges, Beschichtungsmaterial auf die Oberfläche des Zerspanwerkzeuges (1) aufgebracht wird und durch Einwirkung der Laserstrahlung zu einer Beschichtung aufgeschmolzen wird.

29. Verfahren nach einem der Ansprüche 16 bis 28, **dadurch gekennzeichnet, dass** durch eine entsprechende Sensoreinrichtung eine Detektion des Zerspanwerkzeuges (1) anhand der reflektierten Laserstrahlung erfolgt.
